# EUROPEAN PATENT APPLICATION

(11) **EP 1 026 211 A1**
(43) Date of publication of application: **09.08.2000**
(21) Application number: 98947934.0
(22) Date of filing: 20.10.1998
(51) Int. Cl.: C09D 163/00, B05D 7/14, B05D 7/24

(54) **COATING COMPOSITION AND METHOD FOR APPLYING THE SAME**

(30) Priority: 21.10.1997 JP 30504897; 18.06.1998 JP 17156398
(71) Applicant: KANSAI PAINT CO., LTD., Amagasaki-shi, Hyogo-ken 661-8555 (JP)
(72) Inventor: WADA, Seiji Belle Demeur Oiso II-203,, Naka-gun, Kanagawa 259-0111 (JP); IKUSHIMA, Satoshi, Nara 634-0004 (JP); SUGAI, Hideo, Kanagawa 254-0017 (JP); AIDA, Haruhiko, Kanagawa 254-0077 (JP); OKUMURA, Yasumasa, Kanagawa 221-0802 (JP); SUGIURA, Kazutoshi, Kanagawa 254-0016 (JP); HORIBE, Kyoichi, Kanagawa 254-0902 (JP); KOBATA, Masami, Kanagawa 254-0016 (JP)
(74) Representative: Albrecht, Thomas, Dr.
(86) International application number: JP9804717
(87) International publication number: WO9920703

(57) **Abstract**

This invention provides a thermosetting organic solvent paint comprising (A) a compound with a number-average molecular weight of less than 2000 and having at least two alicyclic epoxy groups per molecule, (B) an epoxy group-containing acrylic resin which has a number-average molecular weight of 2000 to 50000, a hydroxyl number of 10 to 150 mgKOH/g and an epoxy equivalent of at most 220, (C) a thermally latent cationically polymerizable catalyst and (D) either gelatinized fine polymer particles or a combination of colloidal silica with tetraalkylammonium salt, the molar ratio of epoxy group in component (A) to epoxy group in component (B) ranging from 1 : 1 to 1 : 0.05, and capable of forming a coating film which gives smooth coated surface, is hard to be softned even when exposed to a high temperature of 60°C or higher, excellent in stain resistance, and from which adhered pollutants are easily removed. This invention further provides a method to form a multilayered coating film which comprises coating a substrate with one or more species of colored paint and one or more species of clear paint in order, said method being characterized in that the above-mentioned thermosetting organic solvent paint is used as a clear paint which is to be applied on the uppermost layer.

## Description

### TECHNICAL FIELD

The present invention relates to a coating composition capable of forming a rigid coating film which has a Tukon hardness (20°C) of at least 15, is hardly softened even when exposed to a temperature of 60°C or higher, excellent in stain resistance, and from which adhered pollutants can easily be removed, and further relates to a method for the application of said coating composition.

### BACKGROUND ART

As a topcoat paint (in particular clear paint) for automobile body panel, there are usually used organic solvent type paints which comprise, as main components, hydroxyl group-containing acrylic resin and melamine resin. Although good in weatherability, finished appearance, etc., a coating film made from these paints has yet to have sufficient "acid rain resistance" which has been highlighted recently. As a topcoat paint which has improved in this acid rain resistance, there have been proposed organic solvent type paints (generally called acid epoxy type paints) which comprise, as main components, carboxyl group-containing resin and epoxy group-containing resin, and which are free of melamine resin. Although excellent in weatherability and finished appearance and also in acid resistance, a cured film formed from said acid epoxy type paints has a problem of poor stain resistance which makes it difficult to remove adhered pollutants tracelessly.

The surface of top coating film on outer body panel of automobile is apt to be stained with pollutants (e.g., bird droppings, pollens, dead insects etc.), iron powder, sand mud, exhaust soot (carbon, paraffin, etc.) which adhere to, soak or sink into said coating film. For example, bird droppings which have stuck on the coating film condense as they are dried and solidified, with the result that the surface of top coating film shrinks together, causing decrease in the appearance of portions concerned, such as gloss and distinctness-of-image-gloss. When wetted with rain etc., pollens and dead insects which have adhered to the coat surface elute protein or amino acid, which may possibly penetrate into the coating film to cause stains. Iron powder, sand mud, exhaust soot etc. also adhere to, or sink into coating film to cause stains.

Automobile body panel, when left outdoors, may raise its temperature to 60°C or higher by solar heat. Top coating film is softened at such a high temperature, and, thus, staining by the above-mentioned causes becomes more likely to be accelerated.

Once a coating film is stained in such a manner, the stains cannot be removed by simply wiping or using cleanser or wax, and, thus, appearance is damaged.

Thus, the main purpose of the present invention is to provide a novel organic solvent type paint capable of forming a coating film which is equivalent or superior, in weatherability, finished appearance, acid resistance, etc., to coating film of conventional organic solvent type paints (e.g., those which comprise, as main components, hydroxyl group-containing acrylic resin and melamine resin, such as acid epoxy type paints) used as an automobile topcoat paint, and which is also good in stain resistance and coated surface smoothness.

### DISCLOSURE OF INVENTION

The present invention provides an organic solvent type thermosetting paint which is characterized by comprising (A) a compound with a number-average molecular weight of less than 2000 and having at least two alicyclic epoxy groups per molecule, (B) an epoxy group-containing acrylic resin which has a number-average molecular weight of 2000 to 50000, a hydroxyl value of 10 to 150 mgKOH/g and an epoxy equivalent of at most 220, (C) a thermally latent cationically polymerizable catalyst and (D) either gelatinized fine polymer particles or a combination of colloidal silica with tetraalkylammonium salt, the molar ratio of epoxy group in component (A) to epoxy group in component (B) ranging from 1 : 1 to 1 : 0.05.

The present invention further provides a coating method which is characterized in that, in a method for forming a multilayered coating film by coating a substrate with at least one colored paint and at least one clear paint in order, the above-mentioned organic solvent type thermosetting paint is used as a clear paint which is to be uppermost applied.

The organic solvent type thermosetting paint provided by the present invention gives a coating film which is hardly softened even when exposed to a temperature of 60°C or higher, does not allow pollutants to soak or sink into, can easily be freed from pollutants, even though they have stuck, by water washing or dry cloth rubbing without using detergents, and which is also excellent in weatherability, finished appearance, acid resistance.

A coating film formed from the organic solvent type thermosetting paint provided by the present invention has, furthermore, good coated surface smoothness, and is excellent also in gloss, interlayer adhesivity to other films, water resistance and resistance to cracking caused by long term exposure.

The paint of the present invention is capable of forming a cured coating film which has a Tukon hardness (20°C) of at least 15, a breaking stress of at least 500 kg/cm², and, preferably, has also a Young's modulus of at least 20000 kg/cm^{**2**}. A coating film having these property values is more rigid and tough than film of conventional paints, is hardly softened even when exposed to a temperature of 60°C or higher, does not allow pollutants to soak or sink into, and can easily be freed from pollutants even though they have stuck, and thus has markedly improved stain resistance.

In this description, "Tukon hardness (20°C)" value is obtained as follows. A paint is applied on a glass plate so that the cured coating film may have a thickness of 30 µm, and is then heated under a certain condition, for example, at 140°C for 30 minutes. Thus cured coating film is measured at 20°C by a TUKON microhardness tester made by American Chain & Cable Company. The larger the value is, the harder is the film. A cured coating film which is formed from such known thermosetting paints as mentioned above has usually a Tukon hardness of about 5 to 10. It would be understood therefore how hard a cured film with a Tukon hardness (20°C) of at least 15 which can be formed by the paint of the present invention is.

"Breaking stress" value is obtained as follows. A paint is applied on a glass plate so that the cured coating film may have a thickness of 30 µm, and is then heated under a certain condition, for example, at 140°C for 30 minutes. Thus cured coating film is peeled off the glass plate, and is measured at 20°C by a tension meter made by Orientech Corporation. The larger the value is, the higher the strength of the coating film. A cured coating film which is formed from known thermosetting paints has usually a breaking stress of about 300 to 500 kg/cm². Hence, a coating film with a breaking stress of at least 500 kg/cm² , which can be formed by using the paint of the present invention has a higher breaking stress and is more tough than coating film formed from conventional thermosetting paints.

"Young's modulus" is a value which is measured in a manner similar to the above-mentioned breaking stress. The larger the value is, the higher is the hardness of coating film. A cured coating film which is formed from known thermosetting paints has usually a Young's modulus of about 10000 to 20000 kg/cm². Hence, a coating film with a Young's modulus of at least 20000 kg/cm², which can be formed by using the paint of the present invention is more rigid than coating film formed from conventional thermosetting paints.

### BEST MODE FOR CARRYING OUT THE INVENTION

The paint and coating method of the present invention are described in more detail below.

### Component (A): Alicyclic epoxy group-containing compound

Alicyclic epoxy group-containing compound which is used as component (A) in the paint of the present invention is a compound with a number-average molecular weight of less than 2000 and having at least two alicyclic epoxy groups in a molecule.

"Alicyclic epoxy group" means an oxirane ring (a 3-membered ring constituted by two carbon atoms and an oxygen atom) formed by two adjacent carbon atoms, which constitute a ring of alicyclic hydrocarbon, and by an oxygen atom, and includes neither spiro-type epoxy groups in which the alicyclic hydrocarbon ring and the oxirane ring has only a single carbon atom in common, nor epoxy groups in which an alicyclic hydrocarbon ring and an oxirane ring are connected via another carbon atom. Said alicyclic hydrocarbon can usually be constituted by three to 12, preferably five to six cyclic carbon atoms.

Component (A) is a compound which has 2 or more, preferably 2 to 3, of such alicyclic epoxy groups in a molecule, and which has a number-average molecular weight of less than 2000, preferably 100 to 1500. In general, component (A) has preferably an average epoxy equivalent of 50 to 500, in particular 100 to 300.

Examples of such component (A) include dicyclopentadiene dioxide, bis(2,3-epoxycyclopentyl) ether, epoxycyclohexenecarboxylic acid ethylene glycol diester, bis(3,4-epoxycyclohexylmethyl) adipate, bis(4,5-epoxy-2-methylcyclohexylmethyl) adipate, ethylene glycol-bis(3,4-epoxycyclohexanecarboxylate), 3',4'-epoxycyclohexylmethyl-3,4-epoxycyclo-hexanecarboxylate, 3,4-epoxy-6-methylcyclohexylmethyl-3,4-epoxy-6-methylcyclohexanecarboxylate, 1,2,5,6-diepoxy-4, 7-methanoperhydroindene, 2-(3,4-epoxycyclohexyl)-3',4'-epoxy- 1, 3-dioxane-5-spirocyclohexane, 1,2-ethylenedioxy-bis(3,4-epoxycyclohexylmethane), di-2,3-epoxycyclopentyl ether, 4', 5'-epoxy-2'-methylcyclohexylmethyl-4,5-epoxy-2-methylcyclohexanecarboxylate, etc.

### Component (B): Epoxy group-containing acrylic resin

The epoxy group-containing acrylic resin which is used as component (B) in the paint of the present invention is an epoxy group-containing acrylic resin which has a number-average molecular weight of 2000 to 50000, a hydroxyl value of 10 to 150 mgKOH/g and an epoxy equivalent of at most 220.

Epoxy group which is derived either from the above-mentioned alicyclic epoxy group or from glycidyl (meth)acrylate is in particular suitable for the "epoxy group" of the acrylic resin of component (B). Further included in said "epoxy group" is spiro-type epoxy group m which an alicyclic hydrocarbon ring and an oxirane ring has only a single carbon atom in common.

Such component (B) is obtained by copolymerizing an epoxy group-containing polymerizable monomer (b-1), hydroxyl group-containing polymerizable monomer (b-2) and acrylic polymerizable monomer (b-3) as essential ingredients, and, if necessary, another polymerizable monomer (b-4) as well.

Epoxy group-containing polymerizable monomer (b-1) is a compound which has at least one epoxy group and at least one polymerizable unsaturated double bond per molecule, concrete examples of which include glycidyl (meth)acrylate, methylglycidyl (meth)acrylate, allylglycidyl ether, 3,4-epoxycyclohexylmethyl (meth)acrylate, 2-(1,2-epoxy-4,7-methanoperhydroindene-5(6)-yl) oxyethyl(meth)acrylate, 5,6-epoxy-4, 7-methanoperhydroindene-2-yl-(meth)acrylate, 1 ,2-epoxy-4, 7-methanoperhydroindene-5-yl-(meth)acrylate, 2,3-epoxycyclopentenyl-(meth)acrylate, 3,4-epoxycyclohexylmethylated polycaprolactone (meth)acrylate, product of equal equivalent reaction between acrylic acid or methacrylic acid and the above-mentioned component (A), and compounds which have the following formulae:

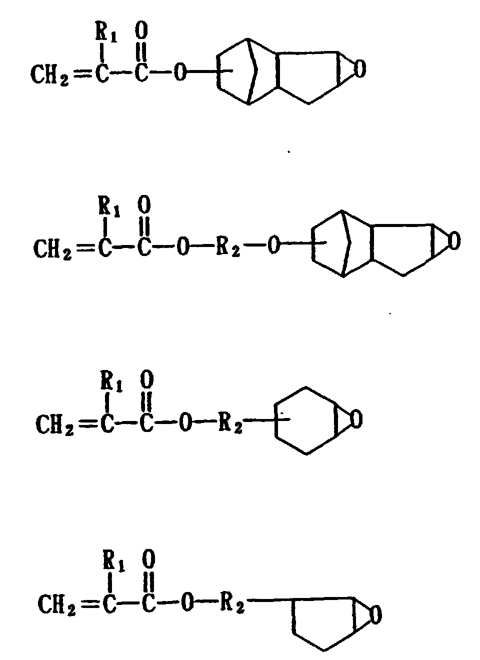

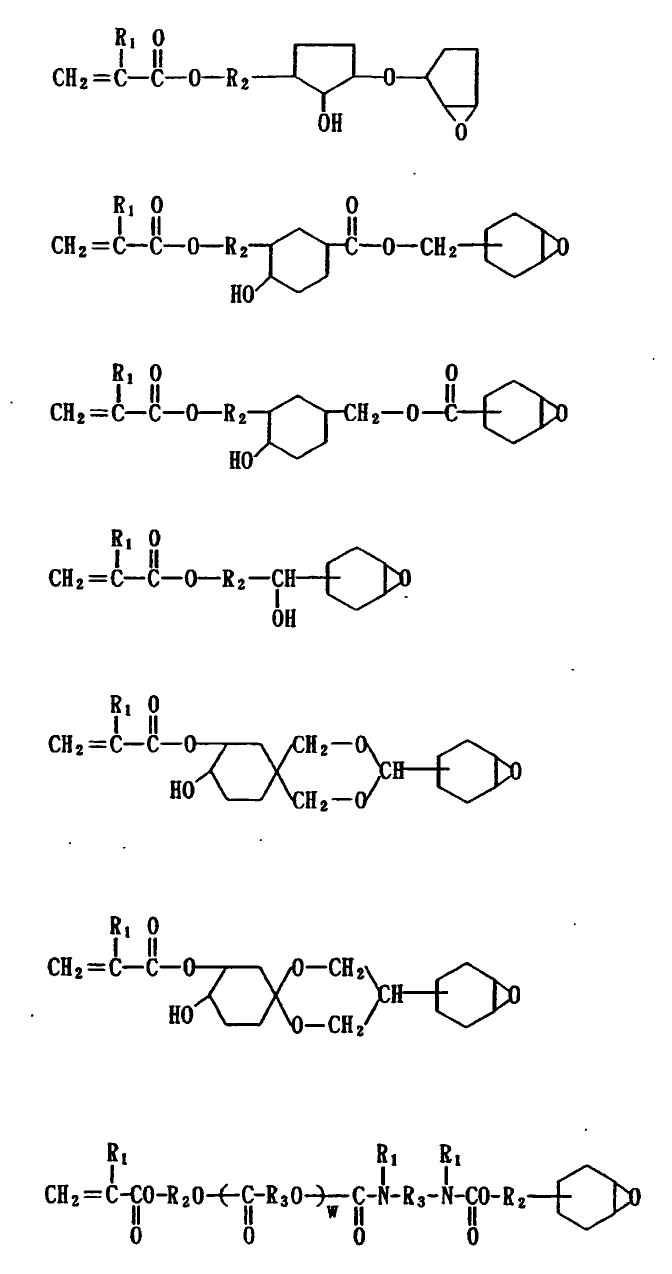

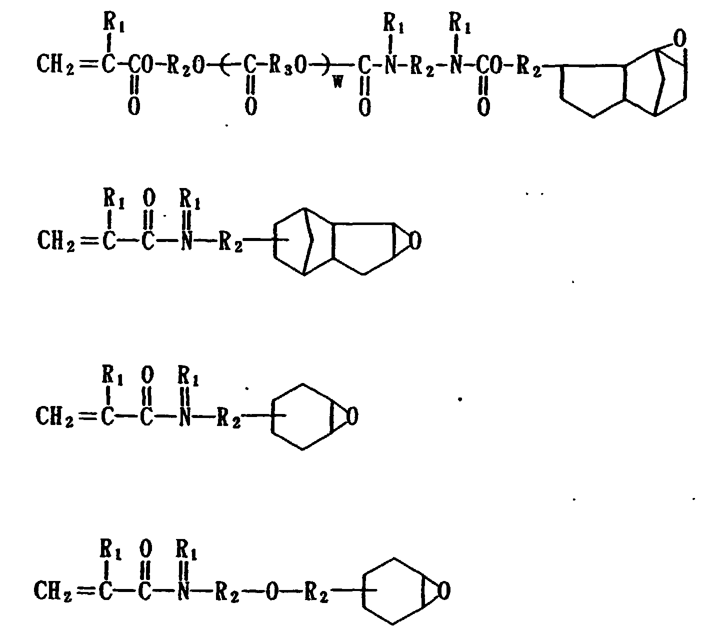

In the above formulae, R₁'s are the same or different and each denote a hydrogen atom or a methyl group, R₂'s are the same or different and each denote a C₁₋₈hydrocarbon group, R₃'s are the same or different and each denote a C₁₋₂₀ hydrocarbon group, and w denotes an integer of 0 to 10.

Hydroxyl group-containing polymerizable monomer (b-2) is a compound which has at least one hydroxyl group and at least one polymerizable unsaturated double bond per molecule. Concrete examples of (b-2) include monoester made from acrylic acid or methacrylic acid such as hydroxyethyl (meth)acrylate, hydroxypropyl (meth)acrylate and hydroxybutyl (meth)acrylate and a dihydric alcohol (glycol) having two to 10 carbon atoms; and monoester made from polyether polyol such as polyethylene glycol, polypropylene glycol and polybutylene glycol and acrylic acid or methacrylic acid.

Acrylic polymerizable monomer (b-3) is an ester made from acrylic acid or methacrylic acid and a monohydric or alicyclic alcohol having one to 24 carbon atoms. Examples of (b-3) include methyl (meth)acrylate, ethyl (meth)acrylate, propyl (meth)acrylate, butyl (meth)acrylate, hexyl (meth)acrylate, 2-ethylhexyl (meth)acrylate, octyl (meth)acrylate, decyl (meth)acrylate, lauryl (meth)acrylate and cyclohexyl (meth)acrylate. These monomers may be used either singly or in combination of two or more.

Another polymerizable monomer (b-4) is a compound which has at least one polymerizable unsaturated double bond per molecule. Concrete examples of (b-4) include the following monomers:
i) Carboxyl group-containing polymerizable monomer such as acrylic acid, methacrylic acid, crotonic acid, itaconic acid, maleic acid and fumaric acid.
ii) Amide type polymerizable monomer such as N-methylol (meth)acrylamide, N-methoxymethyl (meth)acrylamide and N-butoxymethyl (meth)acrylamide.
iii) Vinyl ether such as ethyl vinyl ether, propyl vinyl ether, butyl vinyl ether, hexyl vinyl ether, cyclopentyl vinyl ether, cyclohexyl vinyl ether, phenyl vinyl ether, benzyl vinyl ether and allyl glycidyl ether.
iv) Vinyl acetate, vinyl propionate, ethylene, propylene, vinyl chloride, styrene, α-methylstyrene, N,N-dimethylaminoethyl (meth)acrylate, N,N-diethylaminoethyl (meth)acrylate, (meth)acrylamide, (meth)acrylonitrile and vinyl pyrrolidone.

Component (B) is prepared by subjecting the above-mentioned monomers (b-1), (b-2) and (b-3) as essential ingredients, and, if necessary, (b-4) as well, to usual solution polymerization in the presence of radical polymerization catalyst.

The constitutional proportion of these monomers is selected so that a hydroxyl value may fall within a range of 10 to 150 mgKOH/g, preferably 20 to 120 mgKOH/g, most desirably 40 to 100 mgKOH/g, and that an epoxy equivalent may be at most 220 or may fall within a range of 100 to 220 preferably, more desirably 100 to 170.

Thus formed component (B) preferably has a number-ave-rage molecular weight of 2000 to 50000, in particular 3000 to 20000, most desirably 4000 to 15000.

In the paint of the present invention, component (A) and component (B) are blended so that the molar ratio of epoxy group in component (A) to epoxy group in component (B) may range from 1:1 to 1:0.05, preferably 1:0.8 to 1:0.2, more desirably 1:0.7 to 1:0.3.

Furthermore, component (A) and component (B) are preferably blended so that average epoxy equivalent of these two components in total may be at most 300, in particular 150 to 280, further desirably 170 to 250.

### Component (C): Thermally latent cationically polymerizable catalyst

The paint of the present invention further comprises thermally latent cationically polymerizable catalyst (C) as well as the above-mentioned components (A) and (B). Although inactive at room temperature, cationically polymerizable catalyst (C) has an action of cleaving to generate cation when heated to reach critical temperature and thus initiating cationic polymerization. Examples of this component (C) include onium salt of nitrogen, sulfur, phosphorus or iodine each of which has SbF⁶⁻, SbF⁴⁻, AsF⁶⁻, PF⁶⁻ as an anionic component. Concretely preferred compounds are as follows:

### i) Quaternary ammonium salt type compounds:

For example, N,N-dimethyl-N-benzylanilinium antimony hexafluoride, N,N-diethyl-N-benzylanilinium boron tetrafluoride, N,N-dimethyl-N-benzylpyridinium antimony hexafluoride, N,N-diethyl-N-benzylpyridinium trifluoromethanesulfonate, N,N-dimethyl-N-(4-methoxybenzyl)pyridinium antimony hexafluoride, N,N-diethyl-N-(4-methoxybenzyl)pyridinium antimony hexafluoride, N,N-diethyl-N-(4-methoxybenzyl)toluidinium antimony hexafluoride, N-α,α-dimethylbenzylpyridinium hexafluoroantimonate, N,N-dimethyl-N-(4-methoxybenzyl)toluidinium antimony hexafluoride.

### ii) Sulfonium salt type compounds:

For example, triphenylsulfonium boron tetrafluoride, triphenylsulfonium antimony hexafluoride, triphenylsulfonium arsenic hexafluoride, Adeka CP-66® (made by Asahi Denka Kogyo K.K.), Adeka CP-77® (made by Asahi Denka Kogyo K.K.), tri(4-methoxyphenyl)sulfonium arsenic hexafluoride, benzyltetramethylenesulfonium hexafluoroantimonate, diphenyl(4-phenylthiophenyl)sulfonium arsenic hexafluoride.

### iii) Phosphonium salt type compounds:

For example, ethyltriphenylphosphonium antimony hexafluoride, tetrabutylphosphonium antimony hexafluoride.

### iv) Iodonium salt type compounds:

For example, diphenyliodonium arsenic hexafluoride, di-4-chlorophenyliodonium arsenic hexafluoride, di-4-bromophenyl-iodonium arsenic hexafluoride, di-p-tolyliodonium arsenic hexafluoride, phenyl(4-methoxyphenyl)iodonium arsenic hexafluoride.

These cationically polymerizable catalysts (C) have a function of cleaving to generate cation when heated to reach critical temperature (for example, about 100 to 180°C, preferably about 120 to 160°C) for about 10 to 40 minutes, and thus initiating cationic polymerization among the alicydic epoxy group of the component (A), hydroxyl group and epoxy group of component (B) and accelerating the crosslinking reaction and three-dimensional curing of these two components.

The amount of cationically polymerizable catalyst (C) blended is not restricted in particular. Usually, however, component (C) is suitably blended in an amount of 0.05 to 10 parts by weight especially 0.25 to 7.5 parts by weight, most desirably 0.5 to 5 parts by weight, per 100 parts by weight of total solid content of components (A) and (B).

### Component (D): Gelatinized fine polymer particles (D-1) or a combination of colloidal silica with tetralkylammonium salt (D-2)

In addition to the above-mentioned components (A) to (C), the paint of the present invention further comprises, as an embodiment of this invention, gelatinized fine polymer particles which act as a fluidity modifier for coating film.

Conventional paints such as acid epoxy type paint sometimes contain a fluidity modifier which controls paint fluidity, forms smooth coated surface and inhibits the tendency toward sagging of paint on vertical plane. Examples of such a fluidity modifier include inorganic additives such as erozyl, bentone; polyamide compound; and diurea compound which is obtained from a reaction between diisocyanate compound and monoprimary amine. Although these fluidity modifiers improve sag resistance of paint, they also give rise to problems that the gloss of coated surface, interlayer adhesivity to other films, water resistance of coating film and film's resistance to cracking caused by long term exposure decrease.

Gelatinized fine polymer particles (D-1), when blended as component (D) in the paint of the present invention, give a coating film which has good coated surface smoothness, is hard to sag when applied on vertical plane, and is excellent in gloss, interlayer adhesivity to other films, water resistance and resistance to cracking caused by long term exposure.

Concrete example of gelatinized fine polymer particles (D-1) which is usable in the present invention include gelatinized fine polymer particles which are obtained by subjecting monomers (d-1) and (d-2) as follows:
- (d-1): polymerizable monomer which contains at least two radically polymerizable unsaturated group per molecule, and
- (d-2): radically polymerizable unsaturated monomer other than monomer (d- 1)
to emulsion polymerization in the presence of a reactive emulsifier which contains allyl group in molecule.

Polymerizable monomer (d-1) includes an ester made from polyvalent alcohol and polymerizable unsaturated monocarboxylic acid, an ester made from polybasic acid and polymerizable unsaturated alcohol and an aromatic compound which has at least two vinyl groups. Concrete examples of monomer (d-1) include ethyleneglycol diacrylate, ethyleneglycol dimethacrylate, triethyleneglycol dimethacrylate, tetraethyleneglycol dimethacrylate, 1,3-butyleneglycol dimethacrylate, trimethylolpropane triacrylate, trimethylolpropane trimethacrylate, 1,4-butanediol diacrylate, neopentylglycol diacrylate, 1,6-hexanediol diacrylate, pentaerythritol diacrylate, pentaerythritol triacrylate, pentaerythritol tetraacrylate, pentaerythritol dimethacrylate, pentaerythritol trimethacrylate, pentaerythritol tetramethacrylate, glycerol dimethacrylate, glycerol diacrylate, glycerol allyloxydimethacrylate, 1,1,1-tris(hydroxymethylethane)-diacrylate, 1,1,1-tris(hydroxymethylethane)triacrylate, 1,1,1-tris(hydroxymethylethane)dimethacrylate, 1,1,1-tris(hydroxymethylethane)trimethacrylate, 1,1,1-tris(hydroxymethylpropane)diacrylate, 1,1,1-tris(hydroxymethylpropane)triacrylate, 1,1,1-tris(hydroxymethylpropane)dimethacrylate, 1,1,1-tris(hydroxymethylpropane)trimethacrylate, triallyl cyanurate, triallyl isocyanurate, triallyl trimellitate, diallyl terephthalate, diallyl phthalate and divinyl benzene.

The above-mentioned radically polymerizable unsaturated monomer (d-2) is the rest of components which constitute the gelatinized fine polymer particles. Examples of monomer (d-2) include the followings:
I) Carboxyl group-containing monomer such as acryic acid, methacrylic acid, crotonic acid, itaconic acid, maleic acid and fumaric acid.
II) Hydroxyl group-containing monomer such as 2-hydroxyethyl (meth)acrylate, hydroxypropyl (meth)acrylate, hydroxybutyl (meth)acrylate, allyl alcohol and metaallyl alcohol
III) Nitrogen-containing alkyl(meth)acrylate such as dimethylaminoethyl(meth)acrylate.
IV) Polymerizable amide such as acrylamide, methacrylamide, N,N-dimethylacrylamide and N,N-dimethylaminopropylamide.
V) Polymerizable nitrile such as acrylonitrile and methacrylonitrile.
VI) Alkyl(meth)acrylate such as methyl(meth)acrylate, ethyl(meth)acrylate, n-butyl(meth)acrylate and 2-ethylhexyl(meth)acrylate.
VII) Polymerizable glycidyl compound such as glycidyl(meth)acrylate.
VIII) Polymerizable aromatic compound such as styrene, α-methylstyrene, vinyltoluene and t-butylstyrene.
IX) α-Olefin such as ethylene and propylene.
X) Vinyl compound such as vinyl acetate and vinyl propionate.
XI) Diene compound such as butadiene and isoprene.
XII) Hydrolytic alkoxysilane group-containing monomer such as vinyltrimethoxysilane, vinyltriethoxysilane, vinyltris(2-methoxyethoxy)silane, γ-methacryloxypropyltrimethoxysilane and vinyltriacetoxysilane.

These monomers (d-2), which are to be appropriately selected, may be used either singly or in combination of two or more.

The blending ratio of monomers (d-1) and (d-2) which constitute gelatinized fine polymer particles (D-1) is not strictly restricted but widely variable according to desired properties. Generally, however, monomers (d-1) and (d-2) may be used in the following ratio:
- Monomer (d-1):: 1 to 99 % by weight preferably 2 to 60 % by weight more desirably 3 to 20 % by weight
- Monomer (d-2):: 1 to 99 % by weight preferably 40 to 98 % by weight, more desirably 80 to 97 % by weight

Examples of reactive emulsifier containing allyl group in molecule, which is used for the emulsion polymerization of monomers (d-1) and (d-2), include the followings:

### 1) Allyl group-containing anionically reactive emulsifier

Typical examples are:
sulfonic acid salts having the following formulae ① and ②: 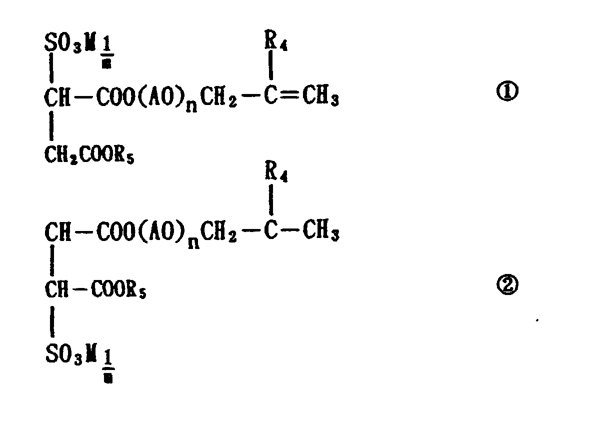 wherein R₄ denotes a hydrogen atom or a methyl group; R₅ denotes a hydrocarbon group, a substituted hydrocarbon group or an organic group which contains an oxyalkylene group; A denotes an alkylene or substituted alkylene group having two to four carbon atoms; n denotes 0 or a positive integer; M denotes an alkali, an alkaline earth metal, an organic amine base or an organic quaternary ammonium base; and m denotes valence or ionic valence of M;
sulfosuccinic acid diester salts having the following formulae ③ and ④: 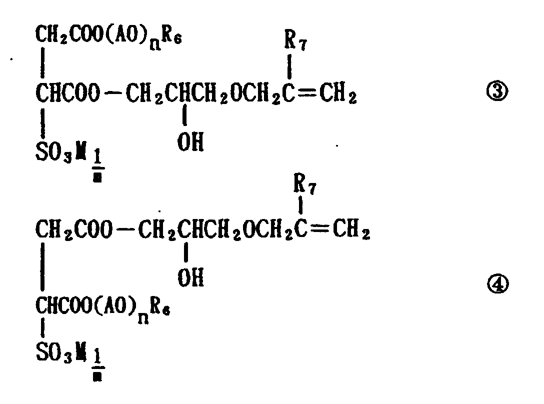 wherein R₆ denotes a hydrocarbon group which may be substituted, a phenyl group, an amino group or a carboxylic acid residue; R₇ denotes a hydrogen atom or a methyl group; A denotes an alkylene group having two to four carbon atoms; n denotes an integer of 0 to 100; M denotes a mono- or divalent cation; and m denotes valence of M;
or compounds having the following formula ⑤: 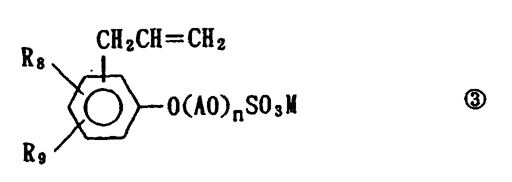 wherein R₈ denotes an alkyl, alkenyl or aralkyl group having 4 to 18 carbon atoms; R₉ denotes a hydrogen atom or an alkyl, alkenyl or aralkyl group having 4 to 18 carbon atoms; A denotes an alkylene or substituted alkylene group having two to four carbon atoms; n denotes an integer of 2 to 200; M denotes an alkali metal atom, NH₄ or an alkanol amine residue.

The above-mentioned compounds are known [from, for instance, Japanese Patent Application Publication (Kokoku) No. Sho 49 (1974)-46291; Japanese Patent Application Laid-Open (Kokai) No. Sho 58 (1983)-203960; Japanese Patent Application Laid-Open (Kokai) No. Sho 62 (1987)-221431; and Japanese Patent Application Laid-Open (Kokai) No. Sho 63 (1988)-23725], and have been put on the market as Eleminol JS-2 (trademark of a product made by Sanyo Chemical Industries, Ltd.), Ratemul S Series (trademark of a product made by Kao Corporation) and Aquaron HS Series (trademark of a product made by DAI-ICHI KOGYO SEIYAKU Co., Ltd.).

### 2) Allyl group-containing cationically reactive emulsifier

A typical example is a reactive emulsifier having a quaternary ammonium salt of the following formula ⑥: 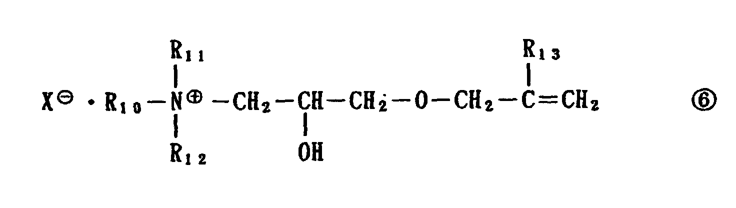 wherein R₁₀ denotes a hydrocarbon group having 8 to 22 carbon atoms which may be substituted; R₁₁ and R₁₂ each denote an alkyl group having 1 to 3 carbon atoms; R₁₃ denotes a hydrogen atom or a methyl group; and X- denotes a monovalent anion.

The above-mentioned compound is known [See: Japanese Patent Application Laid-Open (Kokai) No. Sho 60 (1985)-78947], and has been put on the market under trademark of Ratemul K-180 (a product made by Kao Corporation).

### 3) Allyl group-containing nonionically reactive emulsifier

A typical example is a compound having the following formula ⑦: 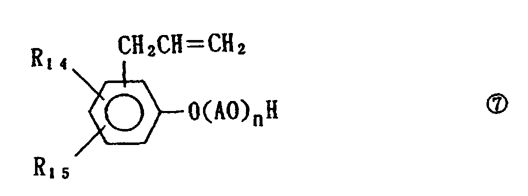 wherein R₁₄ denotes an alkyl, alkenyl or aralkyl group having 4 to 18 carbon atoms; R₁₅ denotes a hydrogen atom or an alkyl, alkenyl or aralkyl group having 4 to 18 carbon atoms; A denotes an alkylene or substituted alkylene group having two to four carbon atoms; and n denotes an integer of 2 to 200.

The above-mentioned compound is known [See: Japanese Patent Application Laid-Open (Kokai) No. Sho 62 (1987)-100502], and has been put on the market under trademark of H-3355N (a product made by DAI-ICHI KOGYO SEIYAKU Co., Ltd.).

In the above-mentioned emulsion polymerization, any reactive emulsifier of the above anionic, cationic and nonionic ones is widely usable so long as it contains an allyl group which is considerably low reactive group, and, thus, the above examples are not restrictive. Preferable is a reactive emulsifier which is gradually taken into polymer during polymerization.

Under circumstances, nonionically reactive emulsifier may be blended with anionically or cationically reactive emulsifier in optional ratio which is to be appropriately selected according to desired properties.

A reactive emulsifier, whether it may be used singly or as a mixture, i.e., a mixture of anionically reactive emulsifier with nonionically reactive emulsifier or a mixture of cationically reactive emulsifier with nonionically reactive emulsifier, is suitably used, in total, in an amount of usually 0.1 to 30 parts by weight preferably 0.3 to 17.5 parts by weight, further desirably 0.5 to 5 parts by weight, per 100 parts by weight of the total of monomers (d-1) and (d-2) which constitute gelatinized fine polymer particles.

As a polymerization initiator which is to be used for the above emulsion polymerization, a water-soluble azoamide compounds of the following formula: 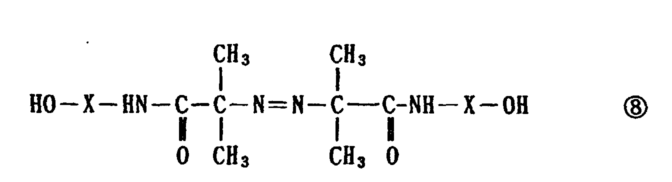 wherein X denotes a straight- or branched-chain alkylene group having 2 to 12 carbon atoms, or of the following formula: 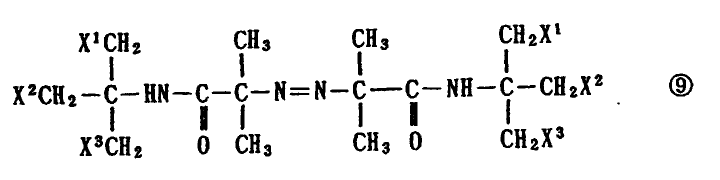 wherein at least one of X¹, X² and X³ is a hydroxyl group, and the rest are hydrogen atom(s).

The above-mentioned compounds are known [See: Japanese Patent Application Laid-Open (Kokai) No. Sho 61 (1986)-218618 and Japanese Patent Application Laid-Open (Kokai) No. Sho 61 (1986)-63643], and have been put on the market as, for instance, VA Series (trademark of a product made by Wako Pure Chem. Ind. Ltd.). Generally, the polymerization initiator is suitably used in an amount of 0.1 to 1.5 parts by weight per 100 parts by weight of the total of monomers (d-1) and (d-2) which constitute gelatinized fine polymer particles.

The copolymerization of monomers (d-1) and (d-2) may be conducted by emulsion polymerization which is a known method for the production of acrylic copolymer. For instance, a mixture of the above monomers (d-1) and (d-2) may be subjected to a reaction, in an aqueous medium, at a reaction temperature of normally about 50 to 100°C, preferably 80 to 95°C, continuously for about one to about 20 hours in the presence of allyl group-containing reactive emulsifier and a reaction initiator of water-soluble azoamide compound.

An aqueous dispersion of gelatinized fine polymer particles which is obtained by emulsion polymerization has a resinous solid content of about 10 to about 40 % by weight on the basis of the total weight. The particle size of gelatinized fine polymer particles in the aqueous dispersion is usually at most 500 nm, preferably 10 to 300 nm, more desirably 50 to 100 nm. Particle size can be arranged by varying the species or amount of reactive emulsifier which has allyl group in molecule. Hence, gelatinized fine polymer particles having a particle size within desired range can be easily obtained.

In the paint of the present invention, thus prepared gelatinized fine polymer particles (D-1) may be applied (blended) in a state of aqueous dispersion. Preferably, however, said (D-1) is blended with the afore-mentioned components (A) to (C), either in the form of powdery polymer from which moisture has been removed or in the form of a dispersion of said powdery polymer in an organic solvent.

Powder of gelatinized fine polymer particles (D-1) is obtained, for instance, by volatilizing moisture in the aqueous dispersion by spray dry method or by use of a drier.

The conversion of fine polymer particles (D-1) from an aqueous dispersion into an organic solvent dispersion is conducted, for instance, either by adding a solvent such as xylene, butyl alcohol, butyl acetate, methylethyl ketone and toluene to an aqueous dispersion of gelatinized fine polymer particles (D-1), and then taking water out of system by means of azeotropy of water with said solvent, and dispersing fine polymer particles (D-1) in an organic solvent, or by volatilizing moisture from the aqueous dispersion of fine polymer particles (D-1) by spray dry method or by simple drying, and then taking out resinous solid content and re-dispersing said resinous solid content in an organic solvent.

Organic solvent preferably does not dissolve fine polymer particles (D-1). Concrete examples of organic solvent include aromatic hydrocarbon such as toluene and xylene; petroleum fractions of various range of boiling point which contain a substantial proportion of aromatic hydrocarbon content; ester such as butyl acetate, ethyleneglycol diacetate and 2-ethoxyethyl acetate; ketone such as acetone and methylisobutyl ketone; and alcohol such as butyl alcohol.

In the paint of the present invention, the blending proportion of fine polymer particles (D-1) is not critical. Generally, however, fine polymer particles (D-1) is preferably used in an amount of 0.1 to 30 parts by weight desirably 0.2 to 20 parts by weight further desirably 0.5 to 15 parts by weight per 100 parts by weight of the total solid content of components (A) and (B).

### Colloidal silica and tetraalkylammonium salt (D-2):

According to another embodiment of the present invention, colloidal silica and tetraalkylammonium salt are blended in the paint of this invention in addition to the above-mentioned components (A) to (C).

Colloidal silica and tetraalkylammonium salt (D-2), when blended in the paint of this invention, provides an organic solvent type paint. A cured coating film which is formed from said paint is hardly softened even when exposed to a temperature of 60°C or higher, does not allow pollutants to soak or sink into, can easily be freed from pollutants, even though they have stuck, by water washing or dry cloth rubbing without using detergents, and is also excellent in weatherability, finished appearance, acid resistance.

As colloidal silica which is to be optionally blended in the paint of the present invention, any known colloidal silica can be used. Specifically preferable one is in the form of dispersion of ultrafine particles of silicon dioxide (SiO₂) suspended in an organic solvent. Said ultrafine particles are preferably of spheric silica which have been rendered high molecular by siloxane bond and which may have hydroxyl groups on their surface. The size of said fine particles is preferably in the range of 2 to 100 nm, in particular 5 to 50 nm.

As organic solvent to suspend these ultrafine particles, any solvent can be used with no particular restriction. Examples of solvent include hydrocarbon type one such as hexane, heptane, xylene, toluene, cyclohexane; ester type one such as methyl acetate, ethyl acetate, acetic acid ethylene glycol monomethyl ether, acetic acid diethylene glycol monomethyl ether; ether type one such as isopropyl ether, ethylene glycol monomethyl ether, diethylene glycol monobutyl ether; alcohol type one such as ethyl alcohol, butyl alcohol, hexyl alcohol, ketone type one such as methyl isobutyl ketone, methyl ethyl ketone, isophorone, acetophenone.

In the dispersion of ultrafine particles of silicon dioxide (SiO₂) suspended in an organic solvent the content of said silicon dioxide ultrafine particles is, in general, preferably in the range of 15 to 50% by weight in particular 20 to 43% by weight.

The dispersion of ultrafine particles of silicon dioxide (SiO₂) suspended in an organic solvent which is usable in the paint of the present invention, can be obtained on the market. Examples of such a dispersion include Snowtex MA-ST-M®, IPA-ST®, EG-ST®, EG-ST-ZL®, NPC-ST®, DMAC-ST®, MEK®, XBA-ST® and MIBK-ST® (all of which are trademarks of products of Nissan Chemical Industries, Ltd.).

In the paint of the present invention, the blending proportion of colloidal silica may be selected from broad range according to the purpose of use of the paint. Generally, however, colloidal silica is preferably used in an amount of 10 to 140 parts by weight desirably 15 to 100 parts by weight, further desirably 20 to 60 parts by weight, per 100 parts by weight of the total solid content of components (A) and (B).

Tetraalkylammonium salt in component (D-2) is effective to lower the reactivity of colloidal silica and to increase the storage stability thereof.

When used singly as component (D-2), colloidal silica may possibly react easily with epoxy group or the like in components (A) and (B) to decrease in its storage stability.

Examples of tetraalkylammonium salt which is to be used in combination with colloidal silica in the paint of this invention include tetrabutylammonium bromide, tetrabutylammonium iodide, tetrabutylammonium chloride, tetrabutylammonium fluoride and tributylhexylammonium fluoride.

The blending proportion of tetraalkylammonium salt is not restricted in particular. Generally, however, tetraalkylammonium salt is preferably used in an amount of 0.001 to 2 parts by weight desirably 0.25 to 1 part by weight further desirably 0.05 to 1 part by weight, per 100 parts by weight of solid content of colloidal silica.

### Coating composition:

The organic solvent type thermosetting paint of the present invention can be prepared by dissolving or dispersing the above-mentioned component (A), component (B), component (C) and component (D) in anorganic solvent. Examples of usable organic solvent include toluene, xylene, ethyl acetate, butyl acetate, methyl ethyl ketone, methyl isobutyl ⑥ ketone, cyclohexanone, isophorone, methanol, ethanol, butanol, carbinol acetate, methoxybutyl acetate, cellosolve, cellosolve acetate. These examples are however not restrictive. Other organic solvent for paint are also usable.

Incidentally, when colloidal silica and tetraalkylammonium salt (D-2) are used as component (D), colloidal silica and tetraalkylammonium salt should previously be mixed with each other, left at a room temperature for 1 to 10 hours, and then blended with components (A), (B) and (C) in an organic solvent so that the effect caused by the addition of component (D-2) may be shown to a sufficient extent. Thus prepared paint gives a cured coating film which exhibits the afore-mentioned characteristic values even after a long term storage.

According to the purpose of use of the paint usual paint additives such as coloring pigment iridescent pigment, metallic pigment, extender pigment, ultraviolet absorbent light stabilizer, fluidity modifier, cissing inhibitor as well as the above-mentioned components may be blended in the paint of the present invention.

The paint of the present invention may be used as clear paint or colored paint such as solid color paint metallic paint or iridescent paint. However, since this paint forms a coating film excellent in stain resistance, it is most preferably used as a clear paint with a view to forming the uppermost transparent coating film.

This invention thus provides a method to form a multilayered coating film by coating a substrate such as automobile body panel with one or more kind of colored paint and one or more kind of clear paint in order, which is characterized in that the paint of the present invention is used as the uppermost clear paint.

The coating method of the present invention is concretely carried out, for example, by the following processes a-c, which are however not restrictive.

### Process a: A process (2-coat process) of applying a colored paint and a clear paint in order, wherein the paint of the present invention is used as a clear paint.

The colored paint used in the "process a" includes solid color paint, metallic paint and iridescent paint. For this colored paint, there may be used known thermosetting paints which contain resin component coloring pigment and solvent as main ingredients.

The resin component used in the above-mentioned colored paint concretely comprises one or more species of base resin component which are selected from acrylic resin, vinyl resin, polyester resin, alkyd resin, urethane resin, etc. having a crosslinking functional group (e.g., hydroxyl group, epoxy group, carboxyl group, alkoxysilane group), and one or more species of crosslinking agent component to crosslink and cure said base resin component which are selected from alkyl-etherified melamine resin, urea resin, guanamine resin, polyisocyanate compound which may be blocked, epoxy compound, carboxyl group-containing compound etc. The base resin component is preferably used in the ratio of 50 to 90%, particularly 60 to 80%, and the crosslinking agent component is preferably used in the ratio of 50 to 10%, particularly 40 to 20%, each based on the total weight of these two components.

Coloring pigment includes solid color pigment, metallic pigment and iridescent pigment which may be used either singly or in combination of two or more of them. As for solvent, although organic solvent type is suitably used, aqueous type may also be used.

"Process a" is suitably conducted by 2-coat-1-bake process (2C1B) or 2-coat-2-bake process (2C2B) in the following manner: Metal-made or plastic-made automobile substrate is coated with the above-mentioned colored paint either directly or after said substrate has been coated with primer such as cationically electrodepositable paint and, as need be, further with an intermediate paint and cured. Said colored paint is applied with airless spray, air spray or electrostatic coating so that cured film may have a thickness of about 10 to about 50 µm, and is then either heated at about 100 to about 180°C, preferably about 120 to about 160°C, for about 10 to about 40 minutes to be crosslinked and cured, or left to stand still at room temperature for several minutes without curing treatment. Then, a clear paint comprising the paint of the present invention is applied in a similar manner so that cured film may have a thickness of about 20 to about 70 µm, and is then heated at about 100 to about 180°C, preferably about 120 to about 160°C, for about 10 to about 40 minutes to be crosslinked and cured.

### Process b: A process (3-coat process) to apply a colored paint a first clear paint and a second clear paint in order wherein the paint of the present invention is used as a second clear paint.

As a coloring paint used in this process b, a paint selected from solid color paint, metallic paint and iridescent paint which are described in the above "process a" can be used. First clear paint is a paint for forming a transparent coating film. Either a paint obtained by eliminating most or all of colored pigment from the above-mentioned colored paint or the paint of the present invention is usable as this first clear paint. As second clear paint, the paint of the present invention is used.

"Process b" is suitably conducted by 3-coat-1-bake process (3C1B), 3-coat-2-bake process (3C2B) or 3-coat-3-bake process (3C3B) in the following manner: Metal-made or plastic-made automobile substrate is coated with the above-mentioned colored paint either directly or after said substrate has been coated with primer such as cationically electrodepositable paint and, as need be, further with an intermediate paint and cured. Said colored paint is applied with airless spray, air spray or electrostatic coating so that cured film may have a thickness of about 10 to about 50 µm, and is then either heated at about 100 to about 180°C, preferably about 120 to about 160°C, for about 10 to about 40 minutes to be crosslinked and cured, or left to stand still at room temperature for several minutes without curing treatment. Then, the coated surface is coated with first clear paint in a similar manner so that so that cured film may have a thickness of about 10 to about 50 µm, and is then either heated at about 100 to about 180°C, preferably about 120 to about 160°C, for about 10 to about 40 minutes to be crosslinked and cured, or left to stand still at room temperature for several minutes without curing treatment. Then, the paint of the present invention as the second clear paint is applied in a similar manner so that cured film may have a thickness of about 10 to about 50 µm, and is then heated at about 100 to about 180°C, preferably about 120 to about 160°C, for about 10 to about 40 minutes to be crosslinked and cured.

### Process c: A coating process (3-coat process) of successively applying a first colored paint, a second colored paint and a clear paint wherein the paint of the present invention is used as a clear paint.

As a first colored paint used in this "process c", a paint selected from solid color paint metallic paint and iridescent paint which are described in the above "process a" can be used. Particularly preferred are solid color paint and metallic paint which are non-transparent and hide substrate. A second colored paint is a paint to be applied on the coated surface of the first colored paint. Although the same colored paint as described in the above "process a" is usable, it is desirable that the second colored paint should have a hiding power to such an extent that the color tone (solid color, metallic feeling, light interference pattern, etc.) of the coated surface of the first colored paint can be visually recognized through the coating film of the second colored paint. It is therefore preferable that the amount of solid color pigment metallic pigment or iridescent pigment blended in the second colored paint is smaller than in the first colored paint. Clear paint is a paint to form a transparent coating film. The paint of the present invention can be used as a clear paint.

"Process c" is suitably conducted by 3C1B, 3C2B or 3C3B in the following manner Metal-made or plastic-made automobile substrate is coated with the first colored paint either directly or after said substrate has been coated with primer such as cationically electrodepositable paint and, as need be, further with an intermediate paint and cured. Said first colored paint is applied with airless spray, air spray or electrostatic coating so that cured film may have a thickness of about 10 to about 50 µm, and is then either heated at about 100 to about 180°C, preferably about 120 to about 160°C, for about 10 to about 40 minutes to be crosslinked and cured, or left to stand still at room temperature for several minutes without curing treatment. Then, the surface of thus applied first colored paint is coated with second colored paint in a similar manner so that cured film may have a thickness of about 10 to about 50 µm, and is then either heated at about 100 to about 180°C, preferably about 120 to about 160°C, for about 10 to about 40 minutes to be crosslinked and cured, or left to stand still at room temperature for several minutes without curing treatment. Then, the paint of the present invention as a clear paint is applied in a similar manner so that cured film may have a thickness of about 10 to about 50 µm, and is then heated at about 100 to about 180°C, preferably about 120 to about 160°C, for about 10 to about 40 minutes to be crosslinked and cured.

The afore-mentioned paint and coating method of the present invention show the following effects:
(1) The cured coating film formed from the paint of the present invention is equivalent or superior, in weatherability, finished appearance, etc., to a coating film of organic solvent type paint comprising, as main components, hydroxyl group-containing acrylic resin and melamine resin, and, moreover, is remarkably excellent in acid resistance.
(2) The cured coating film formed from the paint of the present invention is equivalent or superior, in acid resistance, weatherability and finished appearance, to a coating film of acid epoxy type paint comprising, as main components, carboxyl group-containing resin and epoxy group-containing resin, and, moreover, is remarkably excellent in stain resistance.
(3) The paint of the present invention is capable of easily forming a cured coating film which has a Tukon hardness (20°C) of at least 15, in particular 17 to 25, a breaking stress of at least 500 kg/cm², in particular 600 to 800 kg/cm² and a Young's modulus of at least 20000 kg/cm², in particular 25000 to 35000 kg/cm². Thus prepared coating film is rigid and hardly softened even when exposed to a temperature of 60°C or higher.
(4) Since the cured coating film formed from the paint of the present invention is super-rigid, stain-causing substances such as bird droppings, pollens, dead insects and exhaust soot, even though adhered, scarcely soak into the coating film, and are easily wiped away. Hence, gloss and distinctness-of-image-gloss of the portions concerned do not decrease.
(5) Since the cured coating film formed from the paint of the present invention is super-rigid, iron powder and sand mud are hard to adhere, and, even though adhered, they can be easily removed by simply wiping or simple water washing with sponge without using detergent or wax.
(6) The multilayered coating film formed by the method of the present invention is excellent in weatherability, finished appearance such as gloss and distinctness-of-image-gloss, and also in acid resistance and stain resistance.
(7) The paint of this invention in which gelatinized fine polymer particles are blended is excellent in coated surface smoothness, and is hard to sag even when applied on vertical plane.
(8) The paint of this invention in which gelatinized fine polymer particles are blended forms a coating film which is excellent in gloss, interlayer adhesivity to other films, water resistance and resistance to cracking caused by long term exposure.
(9) When applied even after having been stored for a long period of time (e.g., one month at 20°C), the paint of this invention in which colloidal silica and tetraalkylammonium salt are blended gives a cured coating film whose performance is almost not different from that of a coating film which is formed by applying the paint of this invention immediately after prepared.

Hence, the paint of this invention is quite useful as an uppermost finishing paint for automobile body panel.

### EXAMPLES

In the following, the present invention is described in more detail by working examples and comparative examples. Incidentally, parts and % are both on the weight basis.

### Preparation of samples

### Component (A)

(A-1):
   "CEL-2021P" (trademark of a product of Daicel Chemical Industries, Ltd.)
   Epoxy equivalent 130, theoretical molecular weight 252
      Structural formula 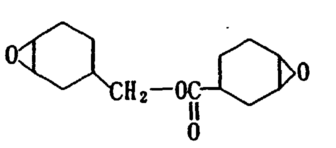
(A-2):
   "Epolead GT302" (trademark of a product made by Daicel Chemical Industries, Ltd.)
   Epoxy equivalent 240, theoretical molecular weight 634
      Structural formula 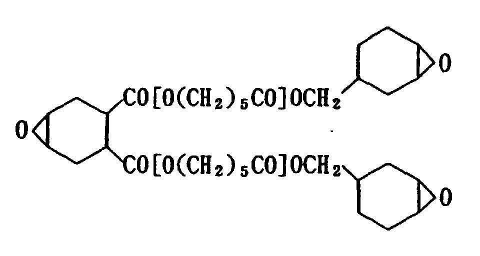
(A-3):
   "Denacol EX212" (trademark of a product made by Nagase Chemical Industries, Ltd.)
   Epoxy equivalent 150, theoretical molecular weight 230
      Structural formula 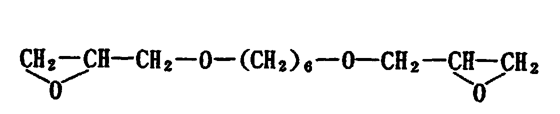
(A-4):
   "Celoxide 3000" (trademark of a product made by Daicel Chemical Industries, Ltd.)
   Epoxy equivalent at most 93.5, theoretical molecular weight 168
      Structural formula

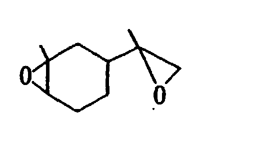

### Component (B)

(B-1):
   An acryl resin having an epoxy equivalent of 218, a hydroxyl value of 56 and a number average molecular weight of 10000, which is prepared by solution-polymerizing 650 parts of glycidyl methacrylate, 116 parts of hydroxyethyl acrylate, 100 parts of n-butyl acrylate and 134 parts of n-butyl methacrylate by a conventional method.
(B-2):
   An acryl resin having an epoxy equivalent of 216, a hydroxyl value of 28 and a number average molecular weight of 3000, which is prepared by solution-polymerizing 850 parts of 3,4-epoxy-cyclohexylmethyl acrylate, 65 parts of hydroxyethyl acrylate and 85 parts of n-butyl acrylate by a conventional method.
(B-3):
   An acryl resin having an epoxy equivalent of 473, a hydroxyl value of 0 and a number average molecular weight of 5000, which is prepared by solution-polymerizing 300 parts of glycidyl methacrylate, 400 parts of n-butyl acrylate, 200 parts of n-butyl methacrylate and 100 parts of 2-ethylhexyl acrylate by a conventional method.

### Component (C)

(C-1):
   "Sanaid SI-100" (trademark of a product made by Sanshin Chemical Industry Co., Ltd.)
   Benzyltetramethylenesulfonium hexafluoroantimonate
(C-2): N-α,α-dimethylbenzylpyridinium hexafluoroantimonate

### Component (D)

Gelatinized polymer fine particle dispersion:

A one liter flask equipped with a stirring device, a thermometer, a cooling tube and a heating mantle was charged with deionized water of an amount shown in Table-1 shown below and an emulsifier of a kind shown in Table-1 in an amount shown in Table-1 and heated up to 90°C while stirring. Added thereto was 20 % of an aqueous solution prepared by dissolving 12.5 parts of a polymerization initiator shown in Table-1 in 500 parts of deionized water. After 15 minutes, 5 % of a monomer mixture shown in Table-1 was added. Then, the remainders of the monomer mixture and the polymerization initiator were started dropwise adding after further stirring for 30 minutes. Dropwise added were the monomer mixture in 3 hours and the polymerization initiator in 3.5 hours, and the polymerization temperature was maintained at 90°C during the addition. Also after finishing dropwise adding the polymerization initiator aqueous solution, the solution was heated for 30 minutes and maintained at 90°C. Then, it was cooled down to a room temperature and taken out using a filter cloth to obtain water based gelatinized polymer fine particle dispersions (a) to (c) having a solid content of 20 %.

These dispersions (a) to (c) were dried respectively on a stainless bat in an electric hot air type drier and taken out in the form of a solid resin. Then, they were dispersed in a mixed solvent of xylene/n-butyl alcohol (50/50 in a weight ratio) heated at 60°C to prepare gelatinized polymer fine particle dispersions (a) to (c) having a solid matter concentration of 20 %, respectively. The properties of the dispersions (a) to (c) are shown in Table-2.

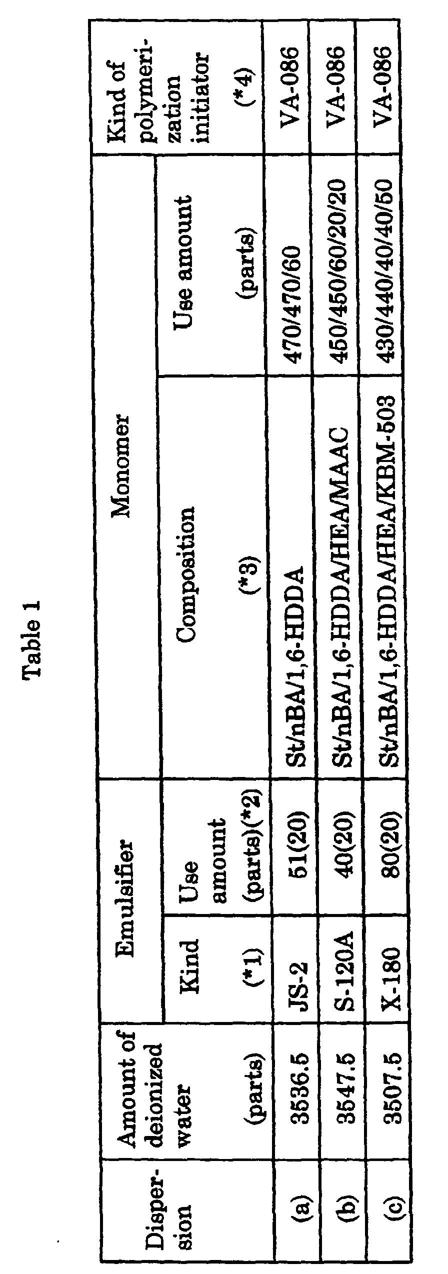

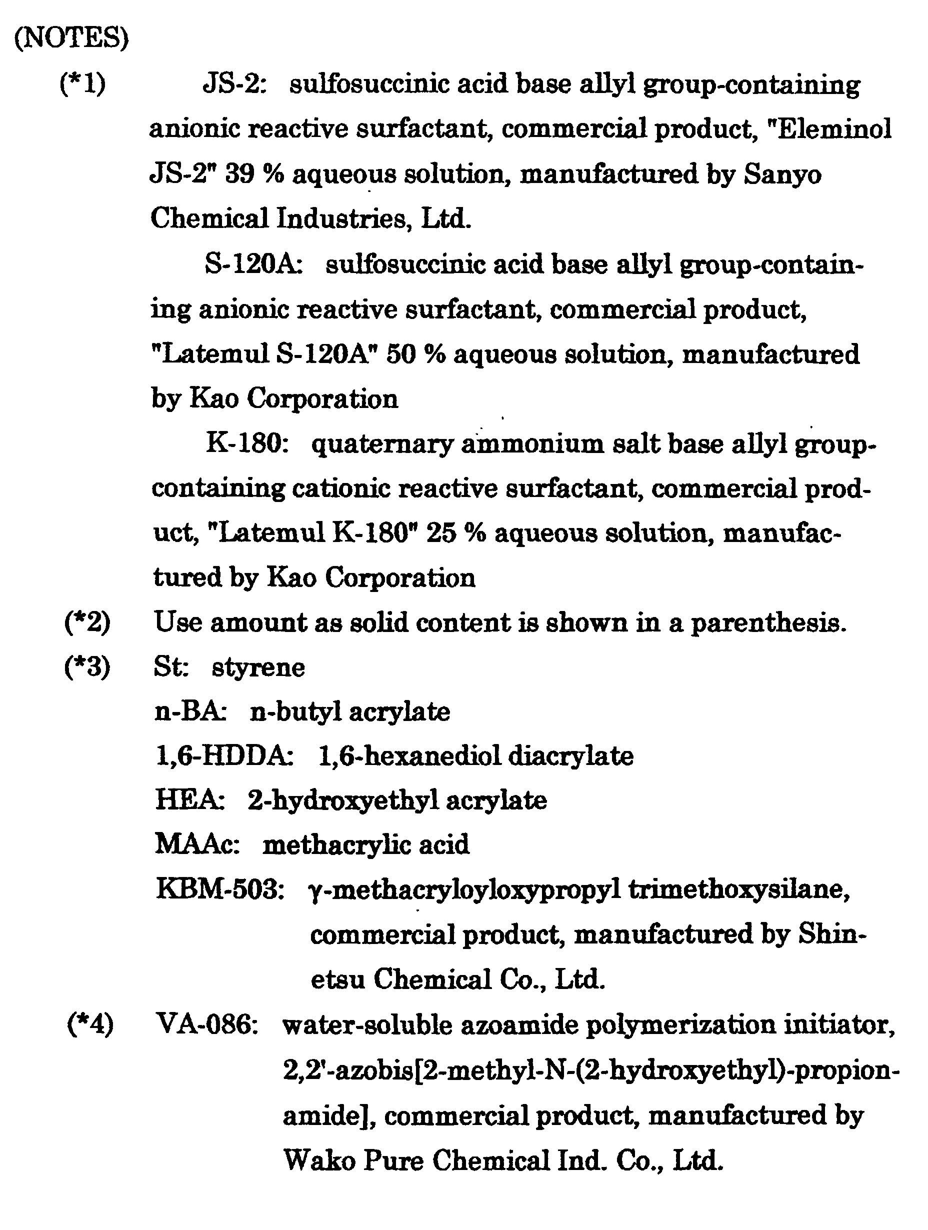

**Table 2**

| Dispersion | Particle diameter (nm) (*5) |
|---|---|
| (a) | 80 |
| (b) | 88 |
| (c) | 85 |

| | |
|---|---|
| (*5) determined by means of Nanocizer N-4 manufactured by Coaltar Co., Ltd. (measured after diluted with xylene/n-butanol 50/50) | |

Colloidal silica (d):

Snowtex XBA-SR (trade name, manufactured by Nissan Chemical Ind Co., Ltd.) is a dispersion in which colloidal silica highly polymerized via a siloxane bond is suspended in an organic solvent (xylene/butanol) and has a hydroxyl group on the surface thereof and which has a spherical form, a particle diameter of 10 to 20 nm and a solid matter concentration of 30 %.

Tetraalkylammonium salt (e): tetrabutylammonium bromide

### Examples 1 to 3

The respective components described above were mixed to prepare coating compositions. The blending ratios of the components are shown in Table 3 described later.

In Table 3:
1) The amount of each component blended is an amount of solid content.
2) The average EP equivalent is the total average epoxy equivalent of the component (A) and the component (B).
3) The B/A mole ratio is a mole ratio of the epoxy groups in the component (B) to the epoxy groups in the component (A).
4) Modaflow is trademark of a surface modifier made by Monsanto Co.
5) "3C2B" under the heading of the coating process is an abbreviation of 3-coat-2-bake process. Concretely, a substrate, which has been coated with a cationically electrodepositable paint and an intermediate paint and heat-cured, is then coated with an organic solvent-based acrylic resin-melamine resin type metallic paint (cured film thickness 20 µ) and an organic solvent-based acrylic resin-melamine resin type first clear paint (cured film thickness 25 µ and the films of these paints are heated at 140°C for 30 minutes to be cured. Subsequently, the paint of the present invention which is obtained in Examples as a second clear paint is applied so that cured film may have a thickness of about 25 µm, and is then heated at 140°C for 40 minutes, to give a coated plate for test.
   In all items other than a "hardness" and a "rupture stress" among the following test items, the coated plates obtained in this 3C2B were used to carry out the coating film tests, and the hardness and the rupture stress were determined using the single coating films of the coating compositions obtained in the examples.
6) "Finished appearance" is a result of visual evaluation of gloss, smoothness, etc. ○ means that they are good, △ means that they are considerably inferior, and X shows that they are remarkably inferior.
7) The "hardness" is a result obtained by heating the coated plate at 20°C or 60°C to determine a Tukon hardness at the above coating film temperature.
8) "Acid resistance" is measured as follows. To a coated surface, 0.4 cc of 40% aqueous solution of sulfuric acid is added dropwise, and is then heated at 60°C for 15 minutes. After washed with water, the coated surface is visually evaluated. ○ means that no abnormality is observed at all, △ means that spot trace remains a little, and X shows that dirt, whitening or blister is remarkable.
9) "Stain removability" is measured as follows. A coated plate is sprayed with a test liquid which has been prepared by mixing 0.25 part of carbon black [12 kinds of test dust made by The Association of Powder Process Industry and Engineering, Japan] with 99.75 parts of deionized water and adding sulfuric acid to adjust to pH 3.0. After left to stand still in an atmosphere at a temperature of 20°C and humidity at 70% for 17 hours, the coated plate is heated at 80°C for 6 hours by a hot air drier. After this process is repeated four times, the coated plate is water-washed with sponge, and is then visually evaluated. ○ means that no stain is observed at all, △ means that stain is observed a little, and X means that stain is markedly observed.
10) "Bird dropping resistance" is measured as follows. Pigeon droppings collected outdoors are mixed with deionized water so that the concentration may become 30%. This mixture is stirred with a disper for 30 minutes, and is then filtered with gauze to give a filtrate as a test liquid. To a coated surface, 0.4 cc of the test liquid is applied dropwise, and is then heated a gradient oven at 70°C for 30 minutes. After water washing, the coated surface is visually evaluated. ○ means that no staining is observed at all, △ means that stain, cloudiness or blister is observed a little, and X means that stain, cloudiness or blister is remarkably observed.
11) "Pollen resistance" is measured as follows. Pollens of Japanese cedar which have been collected outdoors are mixed with deionized water to give a 0.5 % liquid. To a coated surface, 0.4 cc of this liquid is applied dropwise, and is then heated a gradient oven at 65°C for 30 minutes. After water washing, the coated surface is visually evaluated. ○ means that no staining is observed at all, △ means that stain, blister, or shrink is observed a little, and X means that stain, blister or shrink is remarkably observed.
12) "Vertical coating sag-critical film thickness "is a maximum film thickness (µm) in which the coating material coated does not drip, wherein the coating compositions prepared in Examples 1 to 6 and Comparative Examples 1 to 6, the "acid epoxy base clear coating material" prepared in Comparative Example 7 and the "hydroxyl group-containing acryl resin-melamine resin base clear coating material" prepared in Comparative Example 8 are controlled to a viscosity of 30 seconds in terms of Ford cup #4/20°C and coated on a vertical coated face at a rate of 150 ml/minute by means of an air spray. The values shown in the table mean a cured coating film thickness.
13) "Vertical-coating smoothness" is evaluated by observing the coated face baked at 140°C for 30 minutes, wherein the coating compositions prepared in Examples 1 to 6 and Comparative Examples 1 to 6, the "acid epoxy base clear coating material" prepared in Comparative Example 7 and the "hydroxyl group-containing acryl resin-melamine resin base clear coating material" prepared in Comparative Example 8 are controlled to a viscosity of 30 seconds in terms of Ford cup #4/20°C and coated on a vertical coated face in a film thickness of 40 µm in terms of a cured coating film thickness by means of an air spray. The mark ○ shows that the smoothness is good; the mark △ shows that the smoothness is a little inferior; and the mark X shows that that the smoothness is markedly inferior.
14) "Water resistance" is evaluated by observing the coated face after immersing it in warm water of 80°C for 5 hours. The mark ○ shows that no abnormality is observed; the mark △ shows that a little blistering, whitening or gloss reduction is observed; and the mark X shows that a lot of blistering, whitening or gloss reduction is observed.
15) "Adhesivity" is evaluated by cutting the coating film by means of a cutter knife so that the cutter reaches the base to form 100 cross-cuts having a size of 1 mm × 1 mm, adhering an adhesive cellophane tape on the surface thereof and quickly peeling it off to count the number of the remaining cross-cuts. The mark ○ shows that the remaining number is 100 or more; the mark △ shows that the remaining number is 99 to 90; and the mark X shows that the remaining number is 89 or less.
16) "Accelerated weatherability" is evaluated by observing the coated face after testing it by means of a sunshine weather meter for 1000 hours. The mark ○ shows that no abnormality is observed; the mark △ shows that a little gloss reduction is observed; and the mark X shows that a lot of gloss reduction is observed.

### Example 4

This Example shows an embodiment of"2C1B". Concretely, a substrate, which had been coated with a cationically electrodepositable paint and an intermediate paint and heat-cured, was then coated with an organic solvent-based acrylic resin-melamine resin type metallic paint (cured film thickness 20 µ), and, without curing treatment, the resultant coated surface was coated with the paint of the present invention, which had been obtained in Example 1 as a clear paint, so that cured film might have a thickness of about 40 µm, and was then heated at 140°C for 30 minutes so that both of these coating films might be cured, and, thus, a coated plate for test was prepared, which was subjected to the same performance test as mentioned above. Results are shown in Table 3.

### Example 5

The same procedure as in Example 1 was carried out, except that 3C2B in Example 1 described above was changed to 3 coat 1 bake. The results of the performance tests thereof are shown in Table 3 described later.

### Example 6

The same procedure as in Example 1 was carried out, except that "(C-1) 0.5" in Example 1 described above was changed to "(C-2) 0.5". The result of the performance test thereof is shown in Table 3 described later.

### Comparative Examples 1 to 6

Paint compositions for comparison were prepared with use of the afore-mentioned components. The blending proportion of these components is shown in Table 4. In Table 4, the amount of components blended, average EP equivalent B/A molar ratio, the mark of 3C2B, etc., have the same meaning as in the above-mentioned Examples. Test method and evaluation criteria are also the same as in the above Examples.

### Comparative Example 7

Example 1 was repeated except that "the paint obtained in Examples of the present invention" which was used as second clear paint for 3C2B in Example 1 was replaced with an acid epoxy type clear paint below. Results of performance test are shown in Table 5.
- Clear paint:: (Acid epoxy type)

A 50 % xylene solution of a polymer (an acid group-containing acrylic resin having a number average molecular weight of 6000) which comprised 200 parts of half ester of maleic acid and ethanol, 50 parts of acrylic acid, 200 parts of n-butylacrylate, 350 parts of n-butylmethacrylate and 200 parts of styrene was mixed with a 50 % xylene solution of a polymer (an epoxy group-containing acrylic resin having a number average molecular weight of 10000) which comprised 350 parts of glycidylmethacrylate, 130 parts of hydroxyethylmethacrylate, 300 parts of n-butylacrylate, 120 parts of n-butylmethacrylate and 100 parts of styrene, so that the solid content ratio of acid group-containing acrylic resin to epoxy group-containing acrylic resin might be 60 to 40, and, further, tetraethylammonium bromide was added in the proportion of 0.5 part per 100 parts of resin solid content.

### Comparative Example 8

Example 1 was repeated except that "the paint obtained in Examples of the present invention" which was used as second clear paint for 3C2B in Example 1 was replaced with a hydroxyl group-containing acrylic resin-melamine resin type clear paint below. Results of performance test are shown in Table 5.
- Clear paint:: (Hydroxyl group-containing acrylic resin-melamine resin type)

A 50 % xylene solution of a polymer (a hydroxyl group-containing acrylic resin having a number average molecular weight of 5000) which comprised 200 parts of styrene, 200 parts of hydroxyethylmethacrylate, 200 parts of n-butylacrylate, 300 parts of n-butylmethacrylate and 100 parts of 2-ethylhexylacrylate was mixed with a melamine resin ("U-Van 20SE-60®", a butyletherified melamine resin manufactured by Mitsui Toatsu Co.), so that the solid content ratio of hydroxyl group-containing acrylic resin to melamine resin might be 60 to 40.

**Table 3**

| | | Examples | | | | | |
|---|---|---|---|---|---|---|---|
| | | 1 | 2 | 3 | 4 | 5 | 6 |
| (A-1) | | 70 | | 50 | 70 | 70 | 70 |
| (A-2) | | | 60 | | | | |
| (B-1) | | 30 | 40 | | 30 | 30 | 30 |
| (B-2) | | | | 50 | | | |
| (C-1) | | 0.5 | 1 | 0.5 | 0.5 | 0.5 | |
| (C-2) | | | | | | | 0.5 |
| (a) | | 5 | 5 | | 5 | 5 | 5 |
| (b) | | | | 5 | | | |
| (c) | | | | | | 5 | 5 |
| Average EP equivalent | | 156 | 231 | 173 | 156 | 156 | 156 |
| B/A molar ratio | | 0.26 | 0.73 | 0.60 | 0.26 | 0.26 | 0.26 |
| Modaflow | | 0.2 | 0.2 | 0.2 | 0.2 | 0.2 | 0.2 |
| Coating process | | 3C2B | 3C2B | 3C2B | 2C1B | 3C1B | 3C2B |
| Finished appearance | | ○ | ○ | ○ | ○ | ○ | ○ |
| Hardness | 20°C | 20 | 17 | 18 | 18 | 19 | 21 |
| | 60°C | 12 | 10 | 13 | 10 | 10 | 13 |
| Acid resistance | | ○ | ○ | ○ | ○ | ○ | ○ |
| Stain removability | | ○ | ○ | ○ | ○ | ○ | ○ |
| Bird dropping resistance | | ○ | ○ | ○ | ○ | ○ | ○ |
| Pollen resistance | | ○ | ○ | ○ | ○ | ○ | ○ |
| Breaking stress (kg/cm²) | | 510 | 510 | 520 | 530 | 520 | 540 |
| Vertical coating sag-critical film thickness | | 50 | 45 | 45 | 50 | 50 | 50 |

| Vertical coating: | | | | | | | |
|---|---|---|---|---|---|---|---|
| Smoothness | | ○ | ○ | ○ | ○ | ○ | ○ |
| Water-resistance | | ○ | ○ | ○ | ○ | ○ | ○ |
| Adhesivity | | ○ | ○ | ○ | ○ | ○ | ○ |
| Acclelerated weatherability | | ○ | ○ | ○ | ○ | ○ | ○ |

**Table 4**

| | | Comparative Examples | | | | | |
|---|---|---|---|---|---|---|---|
| | | 1 | 2 | 3 | 4 | 5 | 6 |
| (A-1) | | 50 | 30 | 60 | 30 | | |
| (A-3) | | | | | | 70 | |
| (A-4) | | | | | | | 40 |
| (B-1) | | 50 | 70 | | | 30 | 60 |
| (B-3) | | | | 40 | 70 | | |
| (C-1) | | | | 0.5 | 0.5 | 0.5 | 0.5 |
| (C-2) | | | 0.5 | | | | |
| Average EP equivalent | | 174 | 192 | 267 | 372 | 170 | 168 |
| B/A molar ratio | | 0.60 | 1.39 | 0.18 | 0.63 | 0.3 | 0.64 |
| Modaflow | | 0.2 | 0.2 | 0.2 | 0.2 | 0.2 | 0.2 |
| Coating process | | 3C2B | 3C2B | 3C2B | 3C2B | 3C2B | 3C2B |
| Finished appearance | | ○ | ○ | ○ | ○ | ○ | ○ |
| Hardness | 20°C | 10 | 13 | 17 | 10 | 8 | 14 |
| | 60°C | 2 | 4 | 4 | 2 | 2 | 3 |
| Acid resistance | | X | △ | △ | △ | △ | ○ |
| Stain removability | | X | X | △ | △ | X | △ |
| Bird dropping resistance | | X | X | X | X | X | X |
| Pollen resistance | | △ | X | △ | X | X | X |
| Breaking stress (kg/cm²) | | 270 | 410 | 480 | 340 | 450 | 410 |
| Vertical coating sag-critical film thickness | | 35 | 30 | 40 | 35 | 35 | 35 |

| Vertical coating: | | | | | | | |
|---|---|---|---|---|---|---|---|
| Smoothness | | △ | △ | △ | △ | △ | △ |
| Water-resistance | | △ | ○ | ○ | △ | ○ | △ |
| Adhesivity | | △ | X | △ | X | △ | X |
| Acclelerated weatherability | | X | △ | ○ | ○ | ○ | ○ |

**Table 5**

| | | Comparative Examples | |
|---|---|---|---|
| | | 7 | 8 |
| Coating process | | 3C2B | 3C2B |
| Finished appearance | | ○ | ○ |
| Hardness | 20°C | 10 | 9 |
| | 60°C | 2 | 2 |
| Acid resistance | | ○ | X |
| Stain removability | | △ | X |
| Bird dropping resistance | | X | X |
| Pollen resistance | | X | X |
| Breaking stress (kg/cm²) | | 410 | 410 |
| Vertical coating sag-critical film thickness | | 45 | 50 |

| Vertical coating: | | | |
|---|---|---|---|
| Smoothness | | ○ | ○ |
| Water-resistance | | ○ | ○ |
| Adhesivity | | ○ | ○ |
| Acclelerated weatherability | | ○ | ○ |

### Examples 7 to 10 and Comparative Examples 9 and 10

First the whole amount of colloidal silica (d) and a tetraalkylammonium salt (e) was mixed in advance at 20°C and left standing at the same temperature for 2 hours. Then, this mixed solution was mixed with (A-1), (B-1) and (C-1), and an organic solvent was added to adjust the viscosity to 20 seconds in terms of Ford cup #4/20°C, whereby an organic solvent base thermosetting coating material was obtained. The coating material which was stored in a closed state at a room temperature for one hour after producing and the coating material which was stored in a closed state at a room temperature for 36 hours were coated, and the resulting coating films were subjected to performance tests. The blending ratios of the respective components are shown in the following Table 6.

To be specific, an acryl resin, a melamine resin base organic solvent type metallic coating material (film thickness: 20 µm) and an acryl resin-melamine resin base organic solvent type first clear coating material (film thickness: 25 µm) were coated by wet-on-wet on a copper plate on which a cationically electrodepositable coating material and an intermediate coating material were coated and cured by heating, and both coating films were cured at the same time by heating at 140°C for 30 minutes. Then, the coating materials which were obtained as the second clear coating material in the examples and the comparative examples and which had the compositions shown in the following Table 6 were coated so that the film thickness became 25 µm, and the coating films were cured by heating at 140°C for 30 minutes to prepare coated plates for testing, which were measured for the performances of the coating films.

**Table 6**

| | | Examples | | | | Comparative Examples | |
|---|---|---|---|---|---|---|---|
| | | 7 | 8 | 9 | 10 | 9 | 10 |
| (A-1) | | 50 | 50 | 60 | 60 | 50 | 60 |
| (B-1) | | 50 | 50 | 40 | 40 | 50 | 60 |
| (C-1) | | 2 | 2 | 2 | 2 | 2 | 3 |
| (d) | | 30 | 40 | 40 | 50 | 30 | 40 |
| (e) | | 0.15 | 0.2 | 0.2 | 0.25 | - | - |
| Average EP equivalent | | 174 | 174 | 231 | 231 | 174 | 231 |
| B/A molar ratio | | 0.60 | 0.60 | 0.73 | 0.73 | 0.60 | 0.73 |
| Modaflow | | 0.2 | 0.2 | 0.2 | 0.2 | 0.2 | 0.2 |
| Finished appearance | Immediately after | ○ | ○ | ○ | ○ | ○ | ○ |
| | Stored | ○ | ○ | ○ | ○ | △ | △ |
| Hardness 20°C | Immediately after | 25 | 26 | 26 | 27 | 25 | 26 |
| | Stored | 25 | 26 | 26 | 27 | 12 | 13 |
| Hardness 60°C | Immediately after | 17 | 16 | 16 | 18 | 12 | 12 |
| | Stored | 17 | 16 | 16 | 18 | 2 | 2 |
| Breaking stress (kg/cm²) | Immediately after | 700 | 720 | 690 | 710 | 700 | 700 |
| | Stored | 710 | 690 | 670 | 700 | 310 | 290 |
| Young's modulus (kg/cm²) | Immediately after | 25000 | 27000 | 27000 | 29000 | 24000 | 25000 |
| | Stored | 24000 | 26000 | 26000 | 28000 | 17000 | 18000 |
| Gel fraction | Immediately after | 97 | 98 | 98 | 98 | 98 | 98 |
| | Stored | 97 | 98 | 98 | 98 | 82 | 79 |
| Acid resistance | Immediately after | ○ | ○ | ○ | ○ | ○ | ○ |
| | Stored | ○ | ○ | ○ | ○ | △ | △ |
| Stain resistance | Immediately after | ○ | ○ | ○ | ○ | ○ | ○ |
| | Stored | ○ | ○ | ○ | ○ | △ | △ |
| Bird dropping resistance | Immediately after | ○ | ○ | ○ | ○ | ○ | ○ |
| | Stored | ○ | ○ | ○ | ○ | X | X |
| Pollen resistance | Immediately after | ○ | ○ | ○ | ○ | ○ | ○ |
| | Stored | ○ | ○ | ○ | ○ | X | X |

In Table 5:
1) Blending ratio of respective components is a ratio of solid content.
2) Average EP equivalent is the total average epoxy equivalent of the component (A-1) and the component (B-1).
3) B/A mole ratio is a mole ratio of the epoxy groups in the component (B-1) to the epoxy groups in the component (A-1).
4) Modaflow is a trade name of a surface-controlling agent manufactured by Monsant Co., Ltd.
5) The coated plates for testing obtained in the coating steps described above were used to carry out all the performance tests other than breaking stress and Young's modulus. Breaking stress and the Young's modulus were measured with respect to a single coating film (coated to a film thickness of 40 µm and cured by heating at 140°C for 30 minutes) of a paint obtained by mixing the components shown in Table 6.
6) "Finished appearance "is visually evaluated. The mark ○ shows that the gloss and the smoothness are good; the mark △ shows that the gloss and the smoothness are considerably inferior; and the mark X shows that the gloss and te smoothness are markedly inferior.
7) "Hardness "is a result obtained by heating the coated plate for testing described above at 20°C or 60°C to determine a Tukon hardness at the above coating film temperature.
8) "Breaking stress" is a result obtained by applying the coating material on a glass plate so that the film thickness becomes 40 µm, curing it by heating at 140°C for 30 minutes and measuring the resulting coating film at 20°C by means of a tensilon meter manufactured by Orientech Corporation.
9) "Young's modulus" is a result obtained by measuring in the same manner as in 8) described above.
10) "Gel content" is obtained by applying the organic solvent base thermosetting coating materials obtained in the examples and the comparative examples on a glass plate so that the film thickness becomes 25 µm, shaving off the coating films cured by heating at 140°C for 30 minutes by means of a cutter, extracting them in acetone of a refluxing temperature and then determining the coating film residual rate (%) based on the coating film weight before extraction.
11) "Immediately after" is a result obtained by storing the thermosetting coating material obtained by blending the components described in Table 5 according to the procedure described above and adjusting the viscosity in a closed state at a room temperature for one hour after the production and using it for the second clear coating material. "Stored" is a result obtained by storing the coating material at a room temperature in a closed state for 36 hours after the production and using it for the second clear coating material
12) "Acid resistance", "Stain resistance", "Bird dropping resistance" and "Pollen resistance" each mean the same as in Table 3.

## Claims

1. An organic solvent type thermosetting paint which is characterized by comprising (A) a compound with a number-average molecular weight of less than 2000 and having at least two alicyclic epoxy groups per molecule, (B) an epoxy group-containing acrylic resin which has a number-average molecular weight of 2000 to 50000, a hydroxyl number of 10 to 150 mgKOH/g and an epoxy equivalent of at most 220, (C) a thermally latent cationically polymerizable catalyst and (D) either gelatinized fine polymer particles or a combination of colloidal silica with tetraalkylammonium salt, the molar ratio of epoxy group in component (A) to epoxy group in component (B) ranging from 1 : 1 to 1 : 0.05.

2. A paint of claim 1 wherein the component (A) has a number average molecular weight of less than 2000 and an average epoxy equivalent of 50 to 500.

3. A paint of claim 1 wherein the component (A) has a number average molecular weight of 100 to 1500 and an average epoxy equivalent of 100 to 300.

4. A paint of claim 1 wherein the component (B) has a number average molecular weight of 3000 to 20000.

5. A paint of claim 1 wherein the component (B) has a hydroxyl number of 20 to 120 mgKOH/g.

6. A paint of claim 1 wherein the component (B) has an epoxy equivalent of 100 to 220.

7. A paint of claim 1 wherein the molar ratio of epoxy group in component (A) to epoxy group in component (B) ranges from 1 : 0.8 to 1 : 0.2.

8. A paint of claim 1 wherein average epoxy equivalent of the total of component (A) and component (B) is at most 300.

9. A paint of claim 1 wherein the epoxy group of component (B) is one derived either from alicyclic epoxy group or from glycidyl (meth)acrylate.

10. A paint of claim 1 wherein the component (C) is a quaternary ammonium salt a sulfonium salt, a phosphonium salt or an jodonium salt each of which has SbF⁶⁻, SbF⁴⁻, AsF⁶⁻ or PF⁶⁻ as an anionic component.

11. A paint of claim 1 which contains 0.05 to 10 parts by weight of component (C) per 100 parts by weight of total solid content of component (A) and component (B).

12. A paint of claim 1 wherein the gelatinized fine polymer particles as component (D) are obtained by subjecting monomers (d-1) and (d-2) as follows:
(d-1) polymerizable monomer which contains at least two radically polymerizable unsaturated group per molecule, and
(d-2) radically polymerizable unsaturated monomer other than monomer (d-1)
to emulsion polymerization in the presence of a reactive emulsifier which contains allyl group in molecule.

13. A paint of claim 1 which contains 0.1 to 30 parts by weight of gelatinized fine polymer particles per 100 parts by weight of total solid content of component (A) and component (B).

14. A paint of claim 1 wherein colloidal silica as component (D) is blended in the form of a dispersion of spheric ultrafine particles of silicon dioxide suspended in an organic solvent, said silicon dioxide having been rendered high-molecular by means of siloxane bond.

15. A paint of claim 14 wherein the size of spheric fine particles is in the range of 2 to 100 nm.

16. A paint of claim 1 which comprises 10 to 140 parts by weight of colloidal silica as component (D) per 100 parts by weight of total solid content of component (A) and component (B).

17. A paint of claim 14 which comprises 0.001 to 2 parts by weight of tetraalkylammonium salt as component (D) per 100 parts by weight of solid content of colloidal silica.

18. A paint of claim 14 which is obtained by previously mixing colloidal silica and tetraalkylammonium salt as component (D) with each other, and then blending the resultant mixture with components (A), (B) and (C).

19. A paint of claim 1 which forms a cured coating film having a TUKON hardness (20°C) of at least 15 and a breaking stress of at least 500 kg/cm².

20. A method to form a multilayered coating film which comprises coating a substrate with one or more species of colored paint and one or more species of clear paint in order, said method being characterized in that a thermosetting organic solvent paint which is mentioned in any one of claims 1 to 19 is used as a clear paint which is to be applied on the uppermost layer.

21. A method of claim 20 wherein the substrate is automobile body.

22. An article which is coated by the method of claim 20.
